# FASCICULE DE BREVET EUROPEEN

(11) **EP 3 235 083 B1**
(45) Date de publication et mention de la délivrance du brevet: **09.02.2022**
(21) Numéro de dépôt: 15817997.8
(22) Date de dépôt: 10.12.2015
(51) Int. Cl.: H02G 1/08, G02B 6/44

(54) **EMBOUT SPÉCIAL POUR UNE AIGUILLE DESTINÉE À ÊTRE POUSSÉE DANS UN FOURREAU OCCUPÉ PAR DES CÂBLES**
SPEZIELLES ENDSTÜCK FÜR EINE NADEL, DIE ZUM STECHEN IN EINE MIT KABELN GEFÜLLTE HÜLLE BESTIMMT IST
SPECIAL END PIECE FOR A NEEDLE INTENDED TO BE PUSHED INTO A SHEATH OCCUPIED BY CABLES

(30) Priorité: 18.12.2014 FR 1462812
(43) Date de publication de la demande: 25.10.2017
(73) Titulaire: ORANGE, 92130 Issy-les-Moulineaux (FR)
(72) Inventeur: LECOQ, Daniel, 22140 Berhet (FR); CAMPION, Jean-Luc, 22700 Saint Quay Perros (FR); LISSILLOUR, Françoise, 22730 Tregastel (FR)
(86) Numéro de dépôt international: PCT/FR2015/053422
(87) Numéro de publication internationale: WO 2016/097547

(56) Documents cités:
- DE-A1- 4 202 310
- FR-A1- 2 752 952
- US-A- 2 980 398
- US-A- 5 052 660

## Description

### 1. Domaine de l'invention

La demande d'invention se situe dans le domaine du câblage électrique ou optique, et plus particulièrement dans le domaine de l'insertion d'un câble dans un fourreau déjà occupé par un ou plusieurs câbles.

### 2. Etat de la technique antérieure

Dans des locaux, domestiques ou d'entreprise, les câbles de branchement pour l'électricité, la télévision, le téléphone, ou l'Internet, que ce soit des branchements électriques ou optiques, sont en général dissimulés dans des fourreaux à l'intérieur des cloisons.

Avant son installation dans une cloison, un fourreau est en général pré-équipé soit d'un câble, soit d'une aiguille destinée à être retirée depuis une extrémité du fourreau, un câble étant attaché à l'autre extrémité et étant inséré dans le fourreau par traction.

Lorsque le fourreau n'a pas d'aiguille, une technique classique pour y insérer un câble est d'y introduire une aiguille au préalable.

Les aiguilles du commerce destinées à être poussées dans un fourreau sont le plus souvent équipées à leur extrémité d'une partie flexible sur quelques centimètres pour amorcer le passage des coudes rencontrés sur le parcours, et d'un embout avec une tête en forme d'olive pour ne pas buter contre les annelures interne du fourreau, lorsque le fourreau est annelé.

Certains câbles sont assez rigides pour être "poussables" dans un fourreau et peuvent y être insérés à la manière d'une aiguille, et ensuite laissés en place, ce qui évite le recours à une aiguille dans une étape intermédiaire de poussage. Dans ce cas le câble joue le rôle de l'aiguille pendant cette étape de poussage. C'est pourquoi dans ce document, il faut comprendre, par "aiguille", aussi bien un filin destiné à être inséré par poussage dans un fourreau, puis à être retiré du fourreau par traction, qu'un câble destiné à être inséré par poussage dans un fourreau pour y être installé définitivement.

Afin que le câble poussé ne bute pas contre les annelures se trouvant sur la paroi interne du fourreau, l'extrémité du câble est recourbée.

La demande de brevet FR2752952A1 et la demande de brevet DE4202310A1 décrivent des dispositifs d'insertion de câble dans un fourreau occupé, où l'embout fixé à l'aiguille est évidé sur un côté.

Ces solutions ne sont pas efficaces pour insérer un câble dans un fourreau déjà occupé, par exemple un câble optique de 3,8 mm de diamètre de section, lorsque le fourreau est de petit diamètre, comme dans le cas d'un fourreau de 11 mm de diamètre intérieur, lorsqu'il est déjà occupé par un câble, par exemple un câble coaxial de 7 mm de diamètre.

Un des buts de l'invention est de remédier à ces inconvénients de l'état de la technique.

### 3. Exposé de l'invention

L'invention vient améliorer la situation à l'aide d'un embout conforme à la revendication 1, pour guider une aiguille destinée à être insérée dans un fourreau occupé par au moins un câble installé.

La tête de l'embout, grâce à sa forme adaptée, guide la tige, et l'aiguille qui est fixée à son extrémité, dans l'espace laissé libre dans le fourreau par le ou les câbles qui y sont déjà installés. Ainsi, lorsque l'aiguille est insérée dans le fourreau, la tête ouvre un tunnel pour l'aiguille. Lorsqu'un des câbles installés n'est pas dans un alignement parfait et empiète dans l'alignement de l'espace libre, il est poussé hors de l'espace libre par la tête de l'embout. Par "alignement" il faut comprendre un tracé suivant sensiblement l'axe du fourreau, c'est-à-dire un tracé en ligne droite dans un segment droit du fourreau, ou un tracé en courbe dans un segment en courbe du fourreau.

Cette forme adaptée, combinée à la flexibilité progressive de la tige en flexion et en torsion, permet à la tête et la tige d'amorcer un changement de direction du fourreau dans une courbe, même abrupt, et même lorsqu'un des câbles installés a dévié de son alignement dans la courbe.

C'est en effet particulièrement dans les segments du fourreau avec changement de direction, donc dans les courbes, que le ou les câbles installés viennent encombrer l'espace laissé libre et doivent être repoussés vers un côté pour laisser passer l'aiguille.

De plus, en facilitant l'amorce dans les courbes du fourreau, la flexibilité progressive de la tige élimine le flambement de l'aiguille, c'est-à-dire l'ondulation de l'aiguille dans le fourreau sous une force de poussage devenue excessive, si l'aiguille est insérée par poussage. Le flambement augmente le risque de blocage, voire de cassure, de l'aiguille.

Grâce à l'embout selon l'invention, on comprend que l'aiguille peut négocier sans difficultés les courbes prises par le fourreau, même si le fourreau est déjà occupé par un ou plusieurs câbles préalablement installés.

Il est à noter que les avantages de l'embout sont également obtenus lorsque l'aiguille est insérée par traction, c'est-à-dire par le retrait du fourreau soit d'une autre aiguille préalablement insérée, soit d'un câble préalablement installé, l'autre aiguille ou le câble préalablement installé étant attaché à l'embout par un moyen quelconque.

Selon un aspect de l'invention, la tête comprend une face supérieure convexe partiellement cylindrique et une face inférieure concave partiellement cylindrique.

L'espace laissé libre dans le fourreau par le ou les câbles qui y sont déjà installés, vu dans sa section perpendiculairement au fourreau, présente une forme particulière. En effet, le ou les câbles préalablement installés, lorsqu'ils se touchent entre eux, forment ensemble un bouquet de câbles dont la section est de forme généralement circulaire, et d'un diamètre inférieur au diamètre intérieur du fourreau. Le poids et la rigidité des câbles dans les courbes ont pour conséquence que ce bouquet de câbles touche la paroi intérieure du fourreau, ce qui donne à la section de l'espace laissé libre une forme s'approchant de celle d'un croissant de lune.

Grâce à sa forme convexe sur le dessus et concave sur le dessous, la tête présente aussi une forme s'approchant d'un croissant de lune, vu dans sa section perpendiculairement au fourreau.

Lors de l'avance de l'embout dans le fourreau, la face supérieure de la tête glisse contre la paroi interne du fourreau et la face inférieure glisse sur le ou les câbles installés. Ainsi la tête repousse le ou les câbles empiétant dans l'espace libre afin qu'ils restent en bouquet, ce qui dégage et maximise l'espace libre.

Dans le cas courant où il n'y a qu'un seul câble préalablement installé dans le fourreau, et qu'il est de forme circulaire, comme par exemple un câble coaxial de 7mm dans un fourreau de 11mm de diamètre intérieur, une tête avec une section en croissant de lune est particulièrement bien adaptée.

Selon un aspect de l'invention, le rayon de courbure de la face supérieure convexe est inférieur au rayon intérieur du fourreau.

Grâce à cet aspect, la tête de l'embout glisse plus facilement contre la paroi interne du fourreau, et guide plus facilement l'aiguille dans l'espace laissé libre dans le fourreau par le ou les câbles installés. Un des plus petits fourreaux destinés à des câbles électriques ou optiques fait 10mm de diamètre intérieur. Pour un tel fourreau, le rayon de courbure de la surface cylindrique convexe de la tête doit être inférieur à 5mm.

Selon un aspect de l'invention, le rayon de courbure de la face inférieure concave est supérieur au rayon de la section d'un bouquet formé par l'au moins un câble installé.

Grâce à cet aspect, la tête de l'embout glisse plus facilement contre la surface du ou des câbles déjà installés dans le fourreau, et guide plus facilement l'aiguille dans l'espace laissé libre dans le fourreau par le ou les câbles installés. Un des plus gros câbles adapté au câblage intérieur est un câble coaxial qui fait 7mm de diamètre. Pour un tel câble installé seul dans le fourreau, le rayon de courbure de la surface cylindrique concave de la tête doit être supérieur à 3,5mm.

Selon un aspect de l'invention, la face supérieure comprend, à l'extrémité libre de la tête, un bord arrondi.

Les fourreaux destinés à recevoir des câbles de télécommunication ou d'électricité sont couramment des fourreaux dits "annelés", constitués d'anneaux successifs. L'avantage des fourreaux annelés est qu'ils peuvent être facilement courbés dans tous les sens pour suivre n'importe quel tracé, mais leur principal inconvénient est que leur paroi interne présente des annelures, contre lesquelles un embout d'aiguille ou un câble risque de buter et de bloquer lorsqu'il est poussé à l'intérieur du fourreau.

Grâce à sa forme arrondie en pointe, la tête de l'embout glisse sur la surface interne des annelures internes du fourreau, sans bloquer contre la surface latérale d'une de ces annelures.

Par exemple, pour un fourreau typique à 3 annelures par cm, l'arrondi sur la face supérieure doit avoir un rayon d'au moins 2mm.

Selon un autre aspect, la tête a la forme générale d'un disque recourbé, c'est-à-dire la forme d'une tuile dont le périmètre vu du dessus s'inscrit dans un cercle ou un ovale. Ainsi, les bords latéraux de la tête ne présentent pas d'aspérité susceptible de s'accrocher à l'intérieur du fourreau.

Selon un aspect de l'invention, l'extrémité libre de la tête comprend un profil en forme de B.

Grâce à cet aspect, la face supérieure de la tête est arrondie et ne présente pas d'aspérité à la pointe libre de la tête, même si à cette pointe l'épaisseur entre la face supérieure et la face inférieure est insuffisante pour obtenir un arrondi dans la masse. En effet, comme la forme générale de la tête est celle d'une tuile, c'est-à-dire partiellement cylindrique, on évitera ainsi que le bord supérieur de la tuile, convexe, soit susceptible de bloquer contre une annelure de la paroi interne du fourreau, en donnant à ce bord le profil d'un "B" majuscule.

Selon un aspect de l'invention, l'épaisseur maximale entre la face supérieure et la face inférieure est supérieure ou égale au maximum de l'épaisseur de la tige et de l'épaisseur de l'aiguille.

Grâce à cet aspect, la partie la plus épaisse de l'ensemble formé par l'embout et l'aiguille est bien la tête qui guide. De cette façon, la tête ne s'engage pas dans un espace libre sans que la tige et l'aiguille ne puisse la suivre.

Selon un aspect de l'invention, la longueur de la tête dans l'axe de la tige est inférieure à trois fois le diamètre intérieur du fourreau.

De par sa forme à section en demi-lune sur une certaine longueur, la tête possède la forme générale d'une tuile découpée dans un cylindre. Cette forme partiellement cylindrique limite substantiellement la flexibilité de la tête même si sa matière est flexible. Si la tête est trop longue, elle ne pliera que peu, ou pas du tout, dans les courbes du fourreau, et pourrait être bloquée. En limitant la longueur de la tête à trois fois le diamètre intérieur, un tel blocage ne se produit pas.

Selon un aspect de l'invention, la tête est perforée d'un trou.

Grâce à cet aspect, une fois la tête émergeant du fourreau à l'extrémité opposée à l'entrée du fourreau où l'aiguille a été insérée, il est possible d'attacher au trou de la tête de l'embout un câble, puis d'installer ce câble dans le fourreau en retirant l'aiguille du fourreau depuis l'entrée du fourreau.

Selon un aspect de l'invention, la tige est de section oblongue.

Si l'aiguille a un plan préférentiel de courbure, ce qui est le cas par exemple si l'aiguille a une section oblongue, ou si la fonction d'aiguille est remplie par un câble à installer à section oblongue, comme par exemple un câble optique, il est nécessaire que l'embout guide l'aiguille en respectant autant que possible ce plan préférentiel de courbure. Grâce à sa section oblongue, par exemple ovale ou rectangulaire, la tige a également un plan préférentiel de courbure qu'il est possible d'aligner avec celui de l'aiguille, en fixant adéquatement l'embout à l'aiguille. La flexibilité progressive de la tige s'exerçant aussi en torsion, cela permet à la tête d'amorcer progressivement une succession de changements de plans de courbure.

Une telle succession de changements de plans de courbure survient, par exemple, lorsqu'un premier changement de direction dans un plan est immédiatement suivi d'un deuxième changement de direction dans un plan différent, ou par exemple dans une ligne droite si le câble déjà installé est vrillé dans le fourreau et résiste à l'action de dégagement de l'espace libre exercée par la tête.

Selon un autre aspect, la surface de la section de la tige diminue de l'extrémité fixée à l'aiguille vers la tête. Ainsi, si la tige est faite d'une matière homogène, sa flexibilité augmente vers la tête, à la fois en flexion et en torsion.

Selon un autre aspect, la tige est non seulement flexible mais élastique, c'est-à-dire qu'elle tend à reprendre sa forme initiale lorsqu'elle est déformée. Ainsi, la tête de l'embout reste dans l'alignement de l'aiguille et pour la guider dans l'espace libre entre la paroi interne du fourreau et le ou les câbles installés, même après une torsion ou une flexion de la tige résultant du tracé pris par le fourreau, et/ou résultant de variations de l'alignement entre fourreau et câble installé.

Selon un aspect de l'invention, la flexibilité de la tige, au niveau de la seconde extrémité, est sensiblement égale à celle de l'aiguille.

Grâce à cet aspect, il n'y a pas de variation abrupte de la flexibilité entre l'aiguille et l'embout, ce qui empêche la formation d'un angle abrupt entre aiguille et embout au niveau de la fixation, sous la pression de la force de poussage, et élimine le risque de blocage, voire de cassure de la fixation, à ce niveau dans le fourreau.

Selon un aspect de l'invention, la seconde extrémité est fixée à l'aiguille de manière amovible.

Grâce à cet aspect, l'embout de l'aiguille peut être changé si l'aiguille doit être utilisée pour un fourreau de diamètre différent ou si le nombre de câbles préalablement installés varie d'un fourreau à l'autre. De plus, l'embout peut ainsi être fixé à un câble destiné à être installé par poussage, le câble remplissant alors la fonction d'aiguille lors de l'opération d'installation dans le fourreau. La fixation amovible peut par exemple utiliser un système de clipsage entre une partie mâle côté aiguille et une partie femelle côté embout, ou l'inverse, ou utiliser tout autre moyen de fixation amovible connu.

Les différents aspects de l'embout qui viennent d'être décrits peuvent être mis en oeuvre indépendamment les uns des autres ou en combinaison les uns avec les autres.

L'invention concerne aussi un procédé d'insertion d'une aiguille dans un fourreau occupé par au moins un câble préalablement installé, comprenant une étape d'insertion par une entrée du fourreau d'une longueur déterminée de l'aiguille dans le fourreau, le procédé étant caractérisé en ce qu'à l'extrémité de l'aiguille est fixé un embout tel qui vient d'être décrit, et en ce que l'étape d'insertion est précédée d'une étape de positionnement de l'embout à l'entrée du fourreau, dans un espace libre situé entre une paroi interne du fourreau et l'au moins un câble installé, le positionnement étant adapté aux formes respectives de l'espace libre et de l'embout.

### 4. Présentation des figures

D'autres avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :
- la **figure 1** présente une vue d'ensemble d'un exemple d'embout selon l'invention, dans une situation d'utilisation avec une aiguille, un fourreau et un câble,
- la **figure 2** présente un exemple d'embout selon un aspect de l'invention,
- la **figure 3** présente une vue en coupe selon l'axe A-A de la figure 1,
- la **figure 4** présente une vue en détail de l'intérieur d'un fourreau annelé avec un exemple de tête d'embout selon un aspect l'invention,
- la **figure 5** présente un exemple de tracé de fourreau comportant plusieurs virages dans des plans différents.

### 5. Description détaillée d'au moins un mode de réalisation de l'invention

Dans la suite de la description, on présente des exemples de plusieurs modes de réalisation de l'invention se basant sur un fourreau annelé de petite taille et un câble préalablement installé de type coaxial et de grande taille, mais l'invention s'applique également à d'autres types de fourreaux et à plusieurs câbles préalablement installés dans le même fourreau.

Lorsqu'un seul câble installé est mentionné, il faut entendre également plusieurs câbles installés, et lorsqu'une taille ou un diamètre de câble installé est mentionné, il faut entendre la taille ou le diamètre du cercle dans lequel s'inscrivent les câbles regroupés en bouquet.

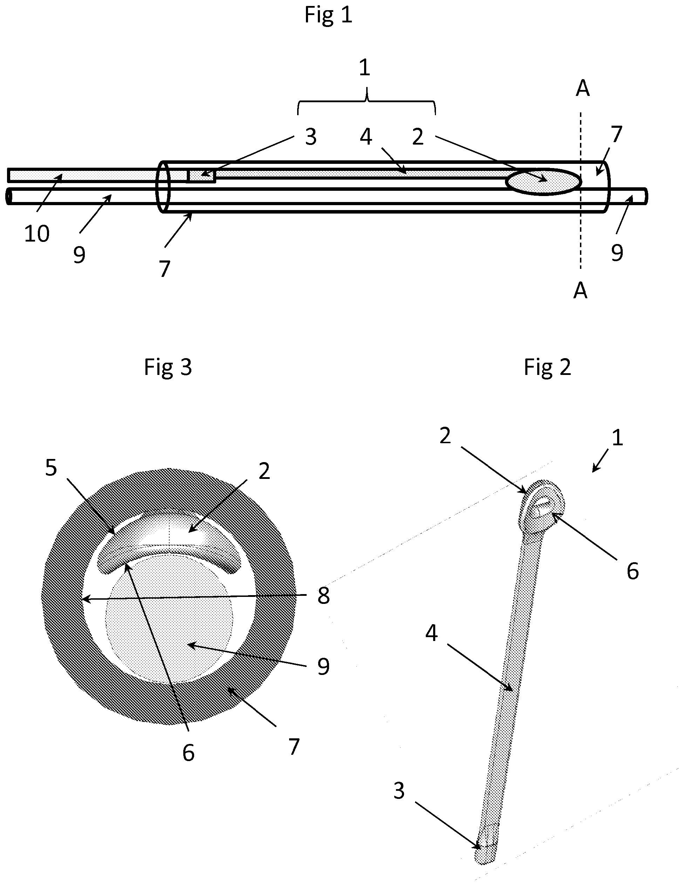

La **figure 1** présente une vue d'ensemble d'un exemple d'embout selon l'invention, dans une situation d'utilisation avec une aiguille, un fourreau et un câble.

Le câble 9 est installé de façon définitive dans le fourreau 7, préalablement à l'insertion de l'aiguille 10. A l'extrémité de l'aiguille 10 est fixé un embout 1. L'aiguille 10 est poussée à l'intérieur du fourreau 7 depuis l'extérieur du fourreau 7. Pendant son insertion, l'aiguille 10 est précédée et guidée par l'embout 1, qui glisse dans l'espace laissé libre à l'intérieur du fourreau 7 par le câble 9. Une vue de cet espace laissé libre est présentée en figure 3, selon un autre angle de vue. L'embout 1 et ses trois parties 2, 3 et 4 est présenté plus en détail en figure 2.

La **figure 2** présente un exemple d'embout selon un aspect de l'invention.

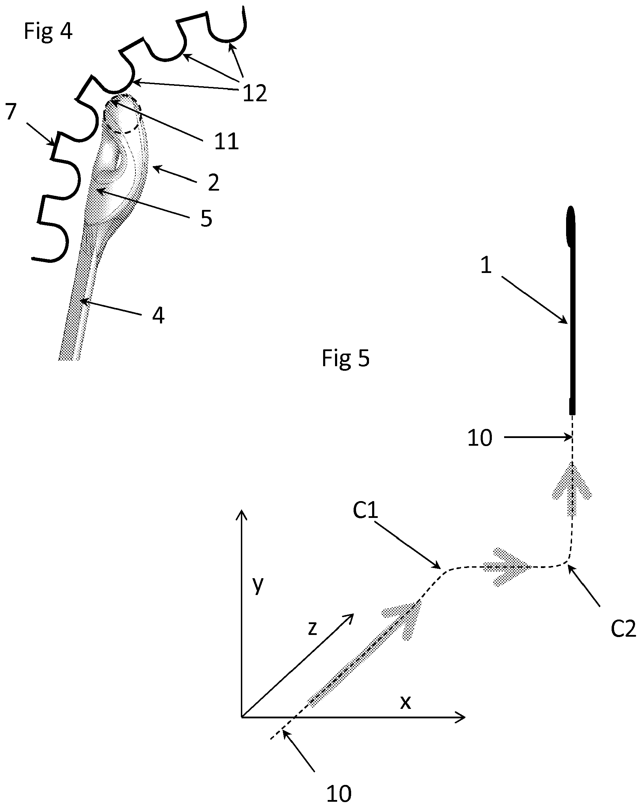

L'embout 1 comprend une tête 2, une extrémité 3 fixée à l'aiguille 10, et une tige 4. La tête possède une face supérieure 5 et une face inférieure 6. La face supérieure 5, opposée à la face inférieure 6, est non visible sur la figure 2 mais l'est sur les figures 3 ou 4, en référence auxquelles la tête 2 est décrite plus en détails.

La tige 4 est flexible et possède un plan de courbure préférentiel qui est le même que celui de l'aiguille 10. En effet, la section d'une aiguille est souvent rectangulaire, ce qui lui impose une flexibilité plus grande dans un plan que dans les autres où elle peut même être nulle, et empêche que l'aiguille se vrille sur elle-même lors de son insertion dans un fourreau. Avantageusement, la section de la tige 4 est plate, ou plus exactement non symétrique radialement, afin de pouvoir lui imposer un plan de courbure préférentiel qui soit sensiblement le même que celui de l'aiguille. Plusieurs formes de section plate conviennent, par exemple rectangulaire, ovale ou plus généralement, oblongue. L'extrémité 3 de l'embout 1 est fixée à l'aiguille 10 de façon solide, c'est-à-dire sans liberté de rotation de l'embout par rapport à l'aiguille. L'embout 1 peut éventuellement être amovible par rapport à l'aiguille, si l'extrémité 3 de l'embout 1 et l'extrémité de l'aiguille 10 sont équipées chacune du mécanisme de fixation adapté.

La flexibilité de la tige 4 est croissante depuis l'extrémité 3 de l'embout 1, vers la tête 2. La flexibilité de la tige 4 est à la fois en courbure dans le plan de courbure préférentiel, et en torsion dans l'axe de sa longueur. Au niveau de l'extrémité 3, la flexibilité est de préférence identique à celle de l'aiguille. La flexibilité est plus grande au niveau de la tête 2 qu'au niveau de l'extrémité 3, ce qui permet à l'embout 1 d'amorcer plus facilement les changements de direction lors de son avance dans le fourreau.

La **figure 3** présente une vue en coupe selon l'axe A-A de la figure 1.

Le câble 9 préalablement installé dans le fourreau 7 est d'un diamètre inférieur au diamètre intérieur du fourreau. Dans cette vue en coupe, on voit que lorsque le câble touche la paroi intérieure du fourreau, un espace libre est créé, en forme de croissant de lune. La tête 2 de l'embout occupe une partie de cet espace libre en prenant une forme similaire. Lorsque la tête 2 est faite d'une matière à faible coefficient de friction, les dimensions de la tête 2 peuvent s'approcher, sans les égaler ni les surpasser, de celles de l'espace libre, sans que la tête ne soit bloquée dans sa progression dans le fourreau occupé. De préférence, le reste de l'embout et l'aiguille ne doivent donc pas excéder les dimensions de la tête.

Un profil en forme de tuile, ou de gouttière, est donc adapté pour la tête, qui a donc une face supérieure et une face inférieure qui sont partiellement cylindriques. De préférence, la face supérieure convexe 5 de cette "tuile" n'a pas exactement le même profil que sa face inférieure 6.

En effet, le rayon de courbure de la face supérieure 5 est de préférence inférieur à celui d'un cercle délimitant la paroi intérieure du fourreau, afin de limiter les points de contacts entre la tête et le fourreau, et donc la friction lors du glissement de la tête dans le fourreau.

Le rayon de courbure de la face inférieure 6, lui, est de préférence supérieur à celui d'un cercle délimitant le périmètre du câble, afin de limiter les points de contacts entre la tête et le câble, et donc la friction lors du glissement de la tête le long du câble.

On comprend que le profil en forme de croissant de lune le mieux adapté pour la tête 2 peut varier entre un croissant très fin et une demi-lune, selon le nombre de câbles installés dans le fourreau, et selon qu'ils sont de même diamètre ou non.

La **figure 4** présente une vue en détail de l'intérieur d'un fourreau annelé avec un exemple de tête d'embout selon un aspect de l'invention.

La plupart des fourreaux utilisés pour le câblage, que ce soit pour l'électricité, la télévision, le téléphone ou l'internet, sont des fourreaux dits "annelés". Ces fourreaux comportent des annelures à l'extérieur comme à l'intérieur, dont la succession donne la forme de tube au fourreau. Dans les segments du tracé pris par le fourreau 7 qui ne sont pas en ligne droite, les annelures 12 à l'intérieur du fourreau 7 sont susceptibles de se mettre directement sur la route de la tête 2 lorsque l'embout 1 progresse dans le fourreau 7. Afin que dans les virages pris par le fourreau 7 la tête 2 puisse glisser d'une annelure 12 à l'autre, sans être bloquée, la pointe libre 11 de la tête 2 est arrondie sur sa face supérieure 5. L'arrondi de la pointe libre 11 s'inscrit dans un cercle imaginaire, représenté en pointillés dans la figure 4, dont le diamètre est de préférence supérieur à l'espacement entre deux annelures 12.

On comprend qu'il n'est pas nécessaire que la face inférieure 6 de la tête 2 comporte un tel arrondi, puisque cette face ne rentre jamais en contact avec la paroi interne du fourreau, mais glisse sur le ou les câbles installés, qui sont lisses.

Si l'épaisseur entre la face supérieure 5 et la face inférieure 6 de la tête 2 est insuffisante pour obtenir un arrondi s'inscrivant dans un cercle suffisamment grand, une variante de l'embout selon l'invention permet d'éviter le blocage de la face supérieure contre une annelure. Dans cette variante, où la tête adopte une forme de tuile de faible épaisseur, l'arrondi nécessaire est obtenu par une découpe de la pointe libre de la tête en forme de B majuscule. Lorsque le B est courbé de bas en haut, le sommet de la tuile ainsi obtenue se situe entre les deux courbes du B, et le profil latéral de la tuile est arrondi sur le dessus.

La **figure 5** présente un exemple de tracé de fourreau comportant plusieurs virages dans des plans différents.

Le tracé selon cet exemple est d'abord horizontal vers l'avant, puis comporte un premier virage C1 vers la droite dans le plan {x, z}, suivi d'un deuxième virage C2 vers le haut dans le plan {x, y}, perpendiculaire au plan {x, z}. Lorsque l'aiguille 10 est poussée dans un fourreau (non illustré) empruntant un tel tracé, la succession des virages C1 et C2 impose donc une torsion à l'aiguille 10. L'aiguille 10 possédant une flexibilité en torsion qui est élastique, son extrémité est donc poussée latéralement, vers le ou les câbles (non illustrés) qui doivent être écartés pour que la progression de l'aiguille 10 puisse continuer dans le fourreau.

La forme spéciale en quartier de lune de la tête de l'embout 1 lui permet de s'insérer entre la paroi interne du fourreau et le ou les câbles, même lorsque l'embout 1 est attiré latéralement par la force de retour de torsion élastique de l'aiguille 10. Ainsi l'aiguille 10 ne reste pas en torsion, et sa torsion ne s'accentue pas jusqu'à un point de rupture si les virages dans des plans différents s'enchainent.

L'invention concerne également un procédé d'insertion d'une aiguille dans un fourreau occupé par au moins un câble préalablement installé. Ce procédé utilise une aiguille à l'extrémité de laquelle est fixé un embout tel qui vient d'être décrit, et comprend :
- une étape de positionnement de l'embout à l'entrée du fourreau, dans un espace libre situé entre la paroi interne du fourreau et l'au moins un câble installé, le positionnement étant tel que la face supérieure convexe 5 de la tête 2 de l'embout 1 est en contact avec la paroi interne du fourreau,
- une étape d'insertion d'une extrémité de l'aiguille dans une entrée du fourreau, au moins jusqu'à ce que l'embout soit entièrement dans le fourreau,
- une étape de poussage, depuis l'extérieur de l'entrée du fourreau, d'une longueur de l'aiguille dans le fourreau, suffisante pour que la tête de l'embout atteigne un point déterminé du tracé du fourreau, qui peut être la sortie du fourreau.

Une fois le point déterminé du fourreau atteint, en général la sortie à l'extrémité opposée à l'entrée, plusieurs options connues se présentent. Si l'aiguille est un câble qui était destiné à être installé et à rester dans le fourreau, l'embout est détaché et conservé pour une utilisation ultérieure avec une autre aiguille.

Sinon, le nouveau câble à installer est fixé à l'aiguille émergeant du fourreau au point déterminé. Ceci peut être effectué de plusieurs façons alternatives:
- soit l'embout est retiré de l'aiguille et le nouveau câble est fixé à l'aiguille à l'aide d'un moyen connu, tel que par exemple un manchon,
- soit le nouveau câble est attaché à la tête de l'embout fixé à l'aiguille, à l'aide d'un moyen connu utilisant le trou 12 de l'embout, tel que par exemple une ficelle,
- soit un deuxième embout est fixé au câble et les deux embouts sont attachés l'un à l'autre à l'aide d'un moyen connu utilisant leur trou 12 respectif.

Ensuite, l'aiguille est tirée depuis l'entrée du fourreau, ce qui a pour conséquence de tirer le nouveau câble vers l'intérieur du fourreau.

On comprend que si un deuxième embout est fixé au câble et l'ensemble est tiré vers l'intérieur du fourreau à l'aide de l'aiguille, le procédé d'insertion décrit plus haut peut également être utilisé. Dans ce cas le câble en phase destiné à être inséré joue le rôle d'aiguille, et l'étape de poussage est remplacée par une étape de traction.

Grâce à l'embout selon l'invention, le procédé d'insertion d'une aiguille selon l'invention permet d'installer un nouveau câble dans un fourreau déjà occupé par au moins un câble préalablement installé, sans blocage de l'aiguille pendant la phase d'insertion.

Un avantage supplémentaire de l'embout selon l'invention est qu'il convient également à l'insertion d'une aiguille dans un fourreau libre de câble, grâce entre autre à la forme de sa tête qui ne présente aucune aspérité sur sa pointe libre.

## Revendications

1. **Embout** (1) pour guider une aiguille (10) destinée à être insérée dans un fourreau (7) occupé par au moins un câble installé (9), l'embout comprenant :
• une première extrémité libre, dite tête (2), de forme adaptée pour glisser entre la paroi interne (8) du fourreau et l'au moins un câble installé,
• une tige reliant la première extrémité à une seconde extrémité de l'embout, l'embout étant **caractérisé en ce que** la tige est de flexibilité croissante vers la tête, la seconde extrémité est fixée à l'aiguille, et la tête a une forme de disque recourbé dont le périmètre vu du dessus s'inscrit dans un cercle ou un ovale.

2. **Embout** selon la revendication 1, où la tête comprend une face supérieure (5) convexe partiellement cylindrique et une face inférieure (6) concave partiellement cylindrique.

3. **Embout** selon la revendication 2, où la face supérieure (5) comprend, à l'extrémité libre (11) de la tête (2), un bord arrondi.

4. **Embout** selon la revendication 2, où l'extrémité libre (11) de la tête (2) comprend un profil en forme de B.

5. **Embout** selon l'une des revendications précédentes, où la tête (2) est perforée d'un trou (12).

6. **Embout** selon l'une des revendications précédentes, où la tige (4) est de section oblongue.

7. **Embout** selon l'une des revendications précédentes, où la tête (2) possède une section en forme de croissant de lune.

8. **Embout** selon l'une des revendications précédentes, où la surface de la section de la tige (4) diminue de la seconde extrémité (3) vers la tête (2).

9. **Embout** selon l'une des revendications précédentes, où la tige (4) tend à reprendre sa forme initiale lorsqu'elle est déformée.

10. **Système comprenant un fourreau et un embout** selon l'une des revendications 1 à 9, où le rayon de courbure de la face supérieure (5) convexe est inférieur au rayon intérieur du fourreau (7).

11. **Système selon la revendication 10 comprenant un bouquet formé d'au moins un câble installé dans le fourreau,** où le rayon de courbure de la face inférieure (6) concave est supérieur au rayon de la section du bouquet.

12. **Système selon l'une des revendications 10 à 11 comprenant une aiguille guidée par l'embout,** où l'épaisseur maximale entre la face supérieure (5) et la face inférieure (6) est supérieure ou égale au maximum de l'épaisseur de la tige (4) et de l'épaisseur de l'aiguille (10).

13. **Système selon l'une des revendications 10 à 12,** où la longueur de la tête (2) dans l'axe de la tige (4) est inférieure à trois fois le diamètre intérieur du fourreau (7).

14. **Système selon l'une des revendications 10 à 13, comprenant une aiguille guidée par l'embout,** où la flexibilité de la tige (4), au niveau de la seconde extrémité (3), est sensiblement égale à celle de l'aiguille (10).

15. **Système selon l'une des revendications 10 à 14, comprenant une aiguille guidée par l'embout,** où la seconde extrémité (3) est fixée à l'aiguille (10) de manière amovible.

16. **Procédé** d'insertion d'une aiguille (10) dans un fourreau (7) occupé par au moins un câble préalablement installé (9), comprenant une étape d'insertion par une entrée du fourreau d'une longueur déterminée de l'aiguille dans le fourreau, le procédé étant **caractérisé en ce qu'**à l'extrémité de l'aiguille est fixé un embout (1) conforme à la revendication 1, et **en ce que** l'étape d'insertion est précédée d'une étape de positionnement de l'embout à l'entrée du fourreau, dans un espace libre situé entre une paroi interne (8) du fourreau et l'au moins un câble installé, le positionnement étant adapté aux formes respectives de l'espace libre et de l'embout.

## Patentansprüche

1. Endstück (1) zum Führen einer Nadel (10), die dazu bestimmt ist, in eine Hülse (7) eingeschoben zu werden, die mit wenigstens einem installierten Kabel (9) gefüllt ist, wobei das Endstück umfasst:
• ein erstes freies Ende, Kopfstück (2) genannt, mit einer Form, die dafür eingerichtet ist, zwischen der Innenwand (8) der Hülse und dem wenigstens einen installierten Kabel zu gleiten,
• einen Stab, der das erste Ende mit einem zweiten Ende des Endstücks verbindet,
wobei das Endstück **dadurch gekennzeichnet ist, dass** der Stab zum Kopfstück hin eine zunehmende Flexibilität aufweist, das zweite Ende an der Nadel befestigt ist und das Kopfstück die Form einer gekrümmten Scheibe aufweist, deren Umfang in der Draufsicht in einen Kreis oder ein Oval einbeschrieben ist.

2. Endstück nach Anspruch 1, wobei das Kopfstück eine teilweise zylindrische, konvexe Oberseite (5) und eine teilweise zylindrische, konkave Unterseite (6) umfasst.

3. Endstück nach Anspruch 2, wobei die Oberseite (5) am freien Ende (11) des Kopfstücks (2) eine abgerundete Kante aufweist.

4. Endstück nach Anspruch 2, wobei das freie Ende (11) des Kopfstücks (2) ein Profil von der Form eines "B" umfasst.

5. Endstück nach einem der vorhergehenden Ansprüche, wobei das Kopfstück (2) von einem Loch (12) durchbohrt ist

6. Endstück nach einem der vorhergehenden Ansprüche, wobei der Stab (4) einen länglichen Querschnitt aufweist.

7. Endstück nach einem der vorhergehenden Ansprüche, wobei das Kopfstück (2) einen halbmondförmigen Querschnitt besitzt.

8. Endstück nach einem der vorhergehenden Ansprüche, wobei sich die Fläche des Querschnitts des Stabes (4) vom zweiten Ende (3) zum Kopfstück (2) hin verkleinert.

9. Endstück nach einem der vorhergehenden Ansprüche, wobei der Stab (4) bestrebt ist, seine ursprüngliche Form wieder anzunehmen, wenn er verformt wird.

10. System, welches eine Hülse und ein Endstück nach einem der Ansprüche 1 bis 9 umfasst, wobei der Krümmungsradius der konvexen Oberseite (5) kleiner als der Innenradius der Hülse (7) ist.

11. System nach Anspruch 10, welches ein Bündel umfasst, das von wenigstens einem in der Hülse installierten Kabel gebildet wird, wobei der Krümmungsradius der konkaven Unterseite (6) größer als der Radius des Querschnitts des Bündels ist.

12. System nach einem der Ansprüche 10 bis 11, welches eine von dem Endstück geführte Nadel umfasst, wobei die maximale Dicke zwischen der Oberseite (5) und der Unterseite (6) größer oder gleich dem Maximum von der Dicke des Stabes (4) und der Dicke der Nadel (10) ist.

13. System nach einem der Ansprüche 10 bis 12, wobei die Länge des Kopfstücks (2) in der Achse des Stabes (4) kleiner als das Dreifache des Innendurchmessers der Hülse (7) ist.

14. System nach einem der Ansprüche 10 bis 13, welches eine von dem Endstück geführte Nadel umfasst, wobei die Flexibilität des Stabes (4) am zweiten Ende (3) im Wesentlichen gleich derjenigen der Nadel (10) ist.

15. System nach einem der Ansprüche 10 bis 14, welches eine von dem Endstück geführte Nadel umfasst, wobei das zweite Ende (3) lösbar an der Nadel (10) befestigt ist.

16. Verfahren zum Einschieben einer Nadel (10) in eine Hülse (7), die mit wenigstens einem zuvor installierten Kabel (9) gefüllt ist, welches einen Schritt des Einschiebens einer bestimmten Länge der Nadel über einen Eingang der Hülse in die Hülse umfasst, wobei das Verfahren **dadurch gekennzeichnet ist, dass** am Ende der Nadel ein Endstück (1) gemäß Anspruch 1 befestigt ist, und dadurch, dass dem Schritt des Einschiebens ein Schritt der Positionierung des Endstücks am Eingang der Hülse in einem freien Raum, der sich zwischen einer Innenwand (8) der Hülse und dem wenigstens einen installierten Kabel befindet, vorausgeht, wobei die Positionierung an die jeweiligen Formen des freien Raumes und des Endstücks angepasst ist.

## Claims

1. End piece (1) for guiding a needle (10) intended to be inserted in a sheath (7) occupied by at least one installed cable (9), the end piece comprising:
• a free first end referred to as the head (2), of a shape suited to slipping in between the internal wall (8) of the sheath and the at least one installed cable,
• a shank connecting the first end to a second end of the end piece,
the end piece being **characterized in that** the shank has a flexibility that increases towards the head, the second end is fixed to the needle, and the head has the shape of a bent-over disc of which the perimeter, when viewed from above, can be inscribed inside a circle or an oval.

2. End piece according to Claim 1, in which the head comprises a partially cylindrical convex upper face (5) and a partially cylindrical concave lower face (6).

3. End piece according to Claim 2, in which the upper face (5) comprises, at the free end (11) of the head (2), a rounded edge.

4. End piece according to Claim 2, in which the free end (11) of the head (2) has a B-shaped profile.

5. End piece according to one of the preceding claims, in which the head (2) is pierced with a hole (12).

6. End piece according to one of the preceding claims, in which the shank (4) is of oblong cross section.

7. End piece according to one of the preceding claims, in which the head (2) has a crescent-shaped cross section.

8. End piece according to one of the preceding claims, in which the cross-sectional area of the shank (4) decreases from the second end (3) towards the head (2).

9. End piece according to one of the preceding claims, in which the shank (4) has a tendency to revert to its initial shape when deformed.

10. System comprising a sheath and an end piece according to one of Claims 1 to 9, in which the radius of curvature of the convex upper face (5) is less than the interior radius of the sheath (7).

11. System according to Claim 10, comprising a bundle formed of at least one cable installed in the sheath, in which the radius of curvature of the concave lower face (6) is greater than the radius of the cross section of the bundle.

12. System according to one of Claims 10 and 11, comprising a needle guided by the end piece, in which the maximum thickness between the upper face (5) and the lower face (6) is greater than or equal to the maximum of the thickness of the shank (4) and of the thickness of the needle (10).

13. System according to one of Claims 10 to 12, in which the length of the head (2) along the axis of the shank (4) is less than three times the inside diameter of the sheath (7).

14. System according to one of Claims 10 to 13, comprising a needle guided by the end piece, in which the flexibility of the shank (4), at the second end (3), is substantially equal to that of the needle (10).

15. System according to one of Claims 10 to 14, comprising a needle guided by the end piece, in which the second end (3) is fixed to the needle (10) removably.

16. Method of inserting a needle (10) in a sheath (7) occupied by at least one previously installed cable (9), comprising a step of inserting a determined length of the needle into the sheath via an inlet of the sheath, the method being **characterized in that** an end piece (1) according to Claim 1 is fixed to the end of the needle, and **in that** the insertion step is preceded by a step of positioning the end piece at the inlet of the sheath, in a free space situated between an internal wall (8) of the sheath and the at least one installed cable, the positioning being adapted to the respective shapes of the free space and of the end piece.
